Europäisches Patentamt

European Patent Office

Office européen des brevets

(19)

(11) **EP 1 161 619 B1**

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(51) Int Cl.$^7$: **F01N 11/00**

(21) Anmeldenummer: **00916881.6**

(86) Internationale Anmeldenummer:
**PCT/EP00/01719**

(22) Anmeldetag: **01.03.2000**

(87) Internationale Veröffentlichungsnummer:
**WO 00/053905 (14.09.2000 Gazette 2000/37)**

(54) **VERFAHREN ZUR ÜBERPRÜFUNG DER FUNKTION VON KATALYSATOREN IN BRENNKRAFTMASCHINEN**

METHOD FOR MONITORING THE FUNCTION OF CATALYSTS IN INTERNAL COMBUSTION ENGINES

PROCEDE POUR CONTROLER LE FONCTIONNEMENT DE CATALYSEURS DANS DES MOTEURS A COMBUSTION INTERNE

(84) Benannte Vertragsstaaten:
**DE FR GB IT SE**

(30) Priorität: **09.03.1999 DE 19910336**

(43) Veröffentlichungstag der Anmeldung:
**12.12.2001 Patentblatt 2001/50**

(73) Patentinhaber:
• **Dr.Ing. h.c.F. Porsche Aktiengesellschaft**
  **70435 Stuttgart (DE)**
• **AUDI AKTIENGESELLSCHAFT**
  **85045 Ingolstadt (DE)**
• **Bayerische Motoren Werke Aktiengesellschaft**
  **80788 München (DE)**
• **Volkswagen Aktiengesellschaft**
  **38436 Wolfsburg (DE)**
• **DaimlerChrysler AG**
  **70546 Stuttgart (DE)**

(72) Erfinder:
• **KÜPER, Paul**
  **D-75446 Wiernsheim (DE)**
• **PETER, Stefan**
  **D-64823 Gross-Umstadt (DE)**
• **MÜLLER, Jens**
  **D-71277 Rutesheim (DE)**

(56) Entgegenhaltungen:
**EP-A- 0 756 072       WO-A-99/06681**
**US-A- 5 592 815**

**Beschreibung**

Die Erfindung betrifft ein Verfahren zur Überprüfung der Funktion von Katalysatoren in Brennkraftmaschinen, gemäß den Merkmalen des Oberbegriffs des Anspruchs 1, wie es bereits aus der WO-A-9906681 bekannt ist. Aus dieser Druckschrift ist ein Verfahren bekannt, bei welchem HC-Meßwerte von einem Sensor stromab des Katalysators erfaßt und diese mit einem Grenzwert verglichen werden. Der jeweilige Grenzwert wird aus einem Satz von Grenzwerten entsprechend den aktuellen Betriebsbedingungen entnommen. Für eine ausreichend und statistisch zuverlässige Fehlererkennung werden für jeden Betriebszustand eine definierte Anzahl von Meßwerten erfaßt.

Aus der DE 37 19 174 A1 ist ebenfalls ein Verfahren zur Überprüfung der Wirksamkeit eines Katalysators bekannt, wobei hier das Mischungsverhältnis der Gaskomponenten des in den Katalysator einströmenden Gasgemisches mit dem Mischungsverhältnis der Gaskomponenten des aus dem Katalysator ausströmenden Gasgemisches verglichen und anhand dieses Ergebnisses eine Bewertung der Katalysatorfunktion vorgenommen wird. So wird beispielsweise die Katalysatorfunktion im Hinblick auf die Korrelation zwischen dem HC-Konvertierungsvermögen und der Sauerstoffspeicherfähigkeit des Katalysators ermittelt. Die Sauerstoffspeicherfähigkeit wird mit Sauerstoffsonden, die vor und nach dem Katalysator angeordnet sind, gemessen. Auf der Grundlage des Verhältnisses der Schadstoffkonzentration vor und nach dem Katalysator wird eine sogenannte Umsetzungsrate bestimmt. Bei einer Umsetzungsrate von annähernd 100% ist der Katalysator voll funktionstüchtig, während z.B. bei einer ümsetzungsrate von kleiner 92 % der Katalysators als nicht mehr funktionstüchtig erkannt wird.

Die Überwachung der Funktion des Katalysators ist notwendig, da Schäden am Katalysator die Abgasemissionen stark erhöhen können. Man ist aus diesem Grund bestrebt, die Überwachung des Katalysators zu verbessern und damit den strengen Abgasnormen und der zunehmend geforderten On -Bord -Diagnose (OBD) gerecht zu werden.

Das Verfahren zur Überprüfung der Katalysatorfunktion in einer Brennkraftmaschine mit den kennzeichnenden Merkmalen des Hauptanspruches hat gegenüber dem bekannten Auswertungsverfahren den Vorteil, daß eine relativ große Zahl von Abgaskenngrößen (z.B. Konzentration), die in gleichartigen, ausgewählten Betriebszuständen der Brennkraftmaschine gemessen werden, nach den Methoden der Statistik zu einem statistisch abgesicherten und in seiner Aussageschärfe beurteilbaren, aktuellen Abgasmittelwert verdichtet werden, der mit der Qualität der Katalysatorfunktion korreliert. Der aktuelle Abgasmittelwert wird mit einem Abgasschwellwert verglichen, der wiederum mit einem definiert gealterten Schwellwertkatalysator ermittelt wurde. Bei dem vorgeschlagenen Verfahren ermöglicht ein zweiter Sensor diese Plausibilitätsprüfung der Ergebnisse. Da die Unterschiede zwischen der Abgasumwandlung von einem neuen zu einem gealterten oder defekten Katalysator am deutlichsten in transienten Zuständen wie Beschleunigung und Verzögerung bei betriebswarmen Motor und betriebswarmer Katalysatoranlage sind, kann mit dem erfindungsgemäßen Verfahren ganz bewußt eine Bewertung der Katalysatorfunktion in diesen Betriebszuständen erfolgen. Das Durchfahren aller möglichen Fahrzustände für eine Beurteilung der Katalysatorfunktion und eine permanente Überwachung dieser Betriebszustände, insbesondere der weniger kritischen, ist damit nicht notwendig, wodurch wiederum die Steuereinheit von unnötigen Rechenoperationen entlastet wird.

Die Bestimmung des aktuell zu vergleichenden Abgaswertes aus einer Reihe von gleichartigen Vergangenheitswerten hat den Vorteil, daß die Messungen statistisch abgesichert sind und die Auswertung somit auf der Basis einer ausreichend großen Anzahl gemessener Werte erfolgt. Eine sehr einfache und aussagekräftige Variante für das Zusammenfassen einer vorgebbaren Anzahl von gemessenen Werten ist die Bildung eines Mittelwertes. Ebenso ist es möglich, wenn auch im folgenden nicht weiter erläutert, den Flächenschwerpunkt bzw. das Integral über die vorgebbare Anzahl der gemessenen Abgaswerte zu bilden.

Vergleidsbeispiele sind in den Figuren dargestellt und in der nachfolgenden Beschreibung näher erläutert. Es zeigen

Fig. 1 den Prinzipaufbau eines Motors mit Katalysatorüberwachung,

Fig. 2 den Ablaufplan eines nicht erfindungsgemäßen Verfahrens in allgemeiner Form

Fig. 3 den Ablaufplan eines nicht erfindungsgemäßen Verfahrens in detaillierter Form

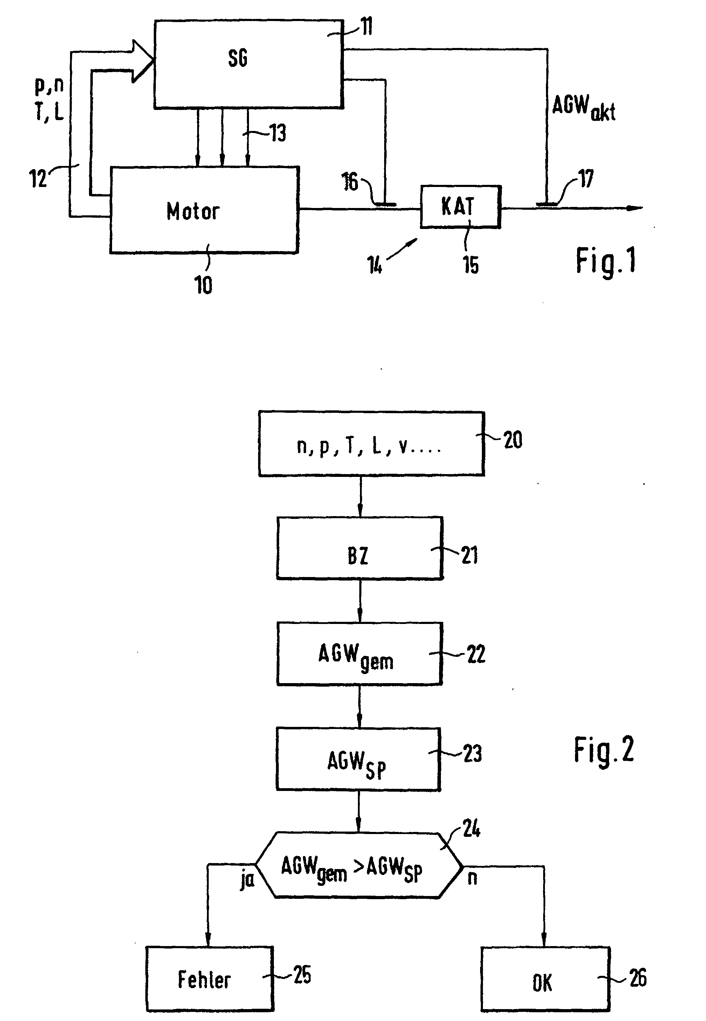

Figur 1 zeigt im Prinzip den Motorblock 10 einer Brennkraftmaschine, ein Steuergerät 11, welches die Funktionen des Motors entsprechend verschiedener Betriebsparameter, die mittels nicht dargestellter Sensoren am Motor erfaßt und dem Steuergerät über eine Verbindung 12 zugeführt werden, über entsprechende Befehle an Stellgrößen den Betrieb des Motors steuert. Die Ausgabe der Steuergrößen ist symbolisch durch die Verbindungspfeile 13 angegeben. An den Motor 10 schließt sich der Abgastrakt 14 an, in welchem der Katalysator 15 angeordnet ist. In der Figur 1 ist vor dem Katalysator ein erster Sensor 16 und nach dem Katalysator ein zweiter Sensor 17 angeordnet, dessen gemessene Signale jeweils an das Steuergerät 11 geführt sind, wobei bei dem erfindungsgemäßen Verfahren der Sensor 16 vor dem Katalysator entfallen kann.

Das erfindungsgemäße Verfahren soll nun zunächst unter Zuhilfenahme der Figur 2 an einem ersten allgemein dargestellten Verfahrensablaufplan grundsätzlich erläutert werden.

In Figur 2 werden zunächst in einem ersten Verfahrensschritt 20 die Betriebsparameter der Brennkraftmaschine, wie beispielsweise Drehzahl n, Druck p, Temperatur T, Last L, Geschwindigkeit v und dergleichen erfaßt. In einem nachgeordneten Arbeitsschritt 21 wird anhand dieser Betriebsparameter der momentane Betriebszustand BZ der Brennkraftmaschine bestimmt. Als nächstes wird im Schritt 22 der aktuelle Abgaswert $AGW_{gem}$ gemessen. Im darauffolgendem Arbeitsschritt 23 wird der für den Betriebszustand zugehörige zulässige Abgas-Referenzwert $AGW_{SP}$ aus einer Speichereinrichtung ausgelesen. Der zulässige Abgas-Referenzwert $AGW_{SP}$ wird beispielsweise in der Applikation oder auf einem Abgas-Rollenprüfstand für die einzelnen Betriebspunkte ermittelt und dann z.B. in einem Kennfeld, welches sich über Drehzahl und Last aufspannt, abgelegt. Da nicht alle Betriebsbereiche des Betriebes einer Brennkraftmaschine kritisch im Hinblick auf die Abgaswerte sind, ist es u.U. sinnvoll eine Überwachung der Abgaswerte nur in den Betriebsbereichen durchzuführen, in denen ein defekter Katalysator sich am stärksten negativ auf die Abgaswerte auswirkt. In einer Abfrage 24 wird geprüft, ob der gemessene Abgaswert $AGW_{gem}$ größer ist als der aus dem Speicher entnommene Referenzwert für das Abgas $AGW_{SP}$. Wird die Abfrage:

$$AGW_{gem} > AGW_{SP}$$

mit JA beantwortet, dann wird im nachfolgenden Arbeitsschritt 25 die Katalysatorfunktion als nicht o.k. erkannt. Wurde die Abfrage verneint, dann wird im Arbeitsschritt 26 der Katalysator als o.k. und damit voll funktionsfähig erkannt.

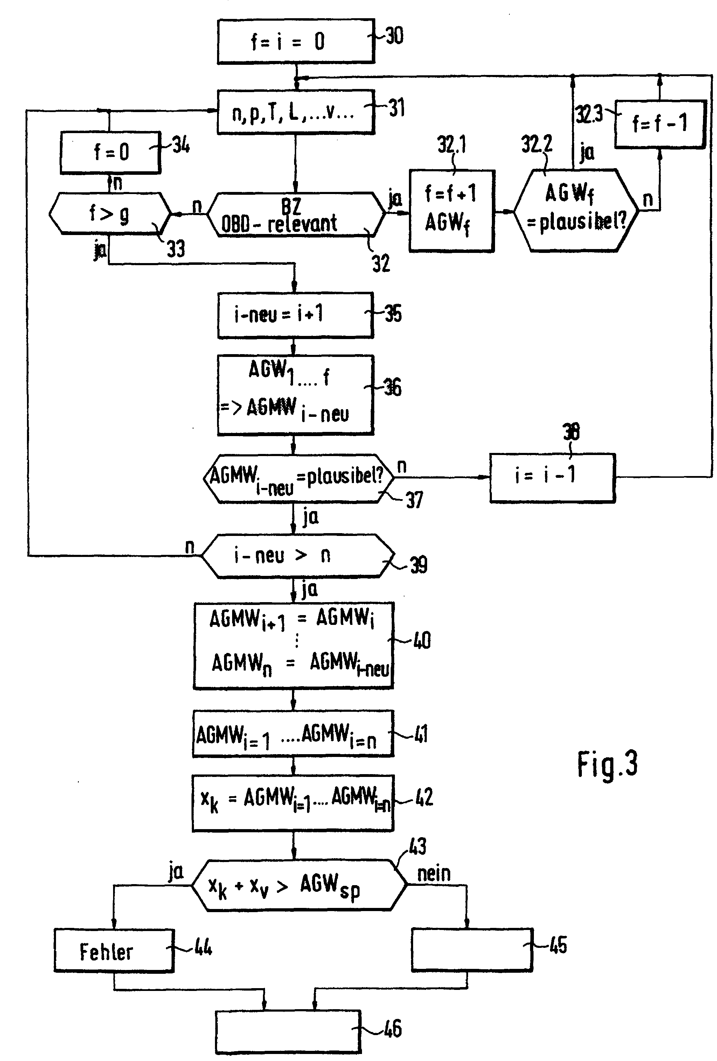

Im Folgenden soll anhand der Figur 3 das nicht erfindungsgemäße Verfahren detaillierter erläutert werden.

In einem ersten Arbeitsschritt 30 wird das Verfahren zur Überprüfung der Katalysatorfunktion gestartet, wobei zwei Zahlwerte i und f auf Null gesetzt werden, i = 0 und f =0. Die Zahlwert i und f können jeweils in einem nicht näher ausgeführten Zähler gezählt werden. Im Arbeitsschritt 31 werden die momentanen Betriebsparameter erfaßt und anhand dieser Betriebsparameter der Betriebszustand BZ ermittelt. In der nachfolgenden Abfrage 32 wird geprüft, ob der Betriebszustand BZ in einem auswerterelevanten Bereich liegt, in welchem ein aussagekräftiges Ergebnis bei der Überwachung der Katalysatorfunktion gewährleistet ist Transiente Fahrzustände, wie beispielsweise Beschleunigungsvorgänge, sind besonders gut geeignet für die Katalysatordiagnose, weil sich hier am ehesten Schwächen des Katalysators durch erhöhte Schadstoffkonzentrationen nach dem Katalysator zeigen. Vor dem Katalysator stellen sich bei solchen definierten Fahrzuständen jeweils gleich hohe Schadstoffkonzentrationen dann ein, wenn der Motor sein Emissionsverhalten nicht ändert. Bei gleicher Ausgangsbasis der Abgaszusammensetzung vor dem Katalysator ist die Auswertung der Abgaszusammensetzung nach dem Katalysator damit am aussagekräftigsten.

Für den Fall, daß die Abfrage 32 mit JA beantwortet wird, wird in einem nachfolgenden Arbeitsschritt 32.1 der Zahlwert f um eins erhöht, so daß gilt: f = f + 1. Gleichzeitig wird der aktuelle Abgaswert $AGW_f$ gemessen. Im anschließenden Arbeitsschritt 32.2 wird geprüft, ob der aktuell gemessene Abgaswert $AGW_f$ plausibel ist. Bei dieser Prüfung auf Plausibilität wird abgefragt, ob der gemessene Abgaswert $AGW_f$ in einem definierten Band möglicher Meßwerte liegt. War der Abgaswert $AGW_f$ plausibel, so führt der Ja-Ausgang dieser Abfrage 32.2. an den Arbeittschritt 31, in welchem die Erfassung eines nächsten Abgaswertes gestartet wird. Ein Nein auf die Abfrage 32.2. führt über den Arbeitsschritt 32.3, in welchem der Zahlwert f wieder um eins dekrementiert wird, so daß gilt: f = f - 1. Das bedeutet, daß der unplausible Abgaswert $AGW_f$ im folgenden nicht berücksichtigt wird.

Ein Nein auf diese Abfrage 32 führt zu einer weiteren Abfrage 33, in welcher geprüft wird, ob ein OBD relevanter Betriebszustand innerhalb einer vorgebbaren Zeit oder für eine vorgebbare Anzahl Messungen vorhergegangen ist. Der Einfachheit halber ist sowohl für die Überprüfung einer Zeitdauer als auch für die Überprüfung einer vorgebbare Anzahl von Messungen der Wert g im Programmablaufplan eingesetzte, so daß sich in Schritt 33 die Frage f > g ergibt.

Ein Nein in der Abfrage 33 setzt in einem Arbeitsschritt 34 den Zähler f wieder auf den Wert Null (f = 0) und beginnt dann im Arbeitsschritt 31 erneut mit der Erfassung der Betriebsparameter und der Bestimmung des Betriebszustandes BZ. Wurde die Abfrage 33 (f > g ) mit Ja beantwortet, dann führt der Ja-Ausgang an einen nachfolgenden Arbeitsschritt 35. Hier wird der Zähler i um den Wert 1 erhöht, so daß gilt: $i_{neu} = i + 1$. Anschließend wird im Arbeitsschritt 36 aus der Anzahl 1...f der gemessenen Abgaswerte $AGW_{1-f}$ der Abgasmittelwert $AGMW_{j-neu}$ gebildet. Dieser neue Abgasmittelwert $AGMW_{i-neu}$ wird in einem Arbeitsschritt 37 auf Plausibilität geprüft. Die Plausibilitätsprüfung 37 prüft, ob der ermittelte Abgasmittelwert $AGMW_{i-neu}$ Wert in einem zulässigen Bereich (z.B. $0 < AGMW_{i-neu} < AGMW_{Mmax}$ ) liegt. Hierbei sollen mögliche durch Meßfehler bedingte Werte von einer weiteren Auswertung ausgeschlossenen werden. Daraus folgt, daß ein Nein auf diese Abfrage 37-$AGMW_{neu}$ nicht plausibel - über einen Arbeitsschritt 38, in welchem der Zähler i um 1 dekrementiert wird, zurückführt zum Arbeitsschritt 31, in welchem erneut die aktuellen Betriebsparameter erfaßt und der Betriebszustand BZ ermittelt wird.

Wurde jedoch der Abgasmittelwert $AGMW_{i-neu}$ als plausibel erkannt und damit die Abfrage 35 mit Ja beantwortet, dann wird in einer nachfolgenden Abfrage 37 überprüft, ob der Zähler i bereits einen vorgebbaren Wert n erreicht hat. Der vorgebbare Wert n wird in der Regel so gewählt, daß eine repräsentative Anzahl von gemessenen Abgasmittelwerten $AGMW_{ineu}$ zur Verfügung steht. Ein möglicher Wert für n könnte beispielsweise der Wert 50 sein. Wurde die Abfrage 37 verneint, dann ist noch nicht eine ausreichende Anzahl von Abgaswerten erfaßt, das Verfahren springt zurück zum Arbeitsschritt 31, infolgedessen dann ein neuer Abgasmittelwerten $AGMW_{i-neu}$ ermittelt wird.

War der ermittelte Abgasmittelwerten $AGMW_{i-neu}$ plausibel, so wird in einer nachgeordneten Abfrage 39 geprüft, ob die bereits eine vorgebbare Anzahl n von Abgasmittelwerten $AGMW_{i-neu}$ erfaßt wurde. Die Prüfung erfolgt in der Art, daß ein einfacher Vergleich des Inhaltes des Zählers i und damit von "i-neu" mit der vorgebbaren Anzahl n(i-neu < n) durchgeführt wird. Ist das Ergebnis dieses Vergleichs negativ, dann führt der Nein-Ausgang zurück zum Arbeitsschritt 31, und es werden weitere Abgasmittelwerte $AGMW_{i-neu}$ erfaßt.

Wurde die Abfrage 39 bejaht, dann sind n Abgasmittelwerte $AGMW_{i-neu}$ erfaßt. Im anschließenden Arbeitsschritt 40 der jeweils älteste erfaßte Wert gelöscht und der neu erfaßte Abgasmittelwert $AGMW_{i-neu}$ gespeichert. Diese Funktion kann beispielsweise mit einem Schieberegister realisiert werden, welches bei jedem Dateneingang alle erfaßten Werte um einen Wert weiterschiebt, so daß schlußendlich der älteste Wert herausfällt. Die Zahl der erfaßten und gespeicherten Meßwerte bleibt somit konstant.

Alle relevanten Abgasmittelwerte $AGMW_{i=1}$ bis $AGMW_{i=n}$ werden in einem Arbeitsschritt 41 für die weitere Bearbeitung gespeichert. Aus diesen gespeicherten Abgasmittelwerten $AGMW_{i=1}$ bis $AGMW_{i=n}$ wird im nachgeordneten Arbeitsschritt 42 ein Gesamtabgasmittelwert $x_k$ berechnet. Bei dieser Berechnung ist es sinnvoll, eine mögliche Standartabweichung zu berechnen und einen zulässigen Vertrauensbereich zuzulassen. Dies ist jedoch im Verfahrensschritt 42 nicht explizit erwähnt, da die Werte für die Standartabweichung und den Vertrauensbereich ggf. auch den Wert null einnehmen können und von Fahrzeug zu Fahrzeug bzw. von Betriebzustand zu Betriebszustand unterschiedlich sein kann. Der so berechnete Gesamtabgasmittelwert $x_k$ stellt einen Wert dar, der für den momentanen Funktionszustand des Katalysators repräsentativ ist.

Im nachfolgenden Arbeitsschritt 43 wird der berechnete Gesamtabgasmittelwert $x_k$ mit einem Offset $x_V$ beaufschlagt, wobei dieser Offset $x_V$ einen nach Verfahren der Statistik bestimmten Bereich darstellt, der ein Maß für die Meßunsicherheit des berechneten Abgasmittelwertes ist. Diese Summe aus Gesamtabgasmittelwert $x_k$ und Offset $x_V$ wird mit dem aus einem Speicher für diesen Betriebszustand BZ entnommenen Referenzwert verglichen ($x_k + x_V < AGW_{Sp}$). Wurde die Abfrage 43 mit Nein beantwortet, so erfolgt im Arbeitsschritt 44 die Fehlerinformation, daß die Katalysatorfunktion - nicht ok - ist. Wurde jedoch der Referenzwert nicht überschritten, dann wird im Arbeitsschritt 45 der Katalysator als funktionstüchtig -ok- erkannt. Sowohl der Arbeitsschritt 44 als auch der Arbeitsschritt 45 sind mit dem letzten Arbeitsschritt 46 verbunden, in welchem das Ende des Programmablaufs erkannt wird, so daß dann ggf. eine neue Auswertung erfolgen kann.

Bei der Auswertung undÜberprüfung der Funktionstüchtigkeit eines Katalysators werden in der Regel HC-, CO- und NOx-Reaktionen im Katalysator, oder Reaktionen anderer Abgaskomponenten ausgewertet, wobei als Meßgröße für diese Effekte die Abgaskonzentration und deren Verlauf erfaßt wird.

In einer anderen erfindungsgemäßen Ausführung wird das Verfahren mit zwei Sensoren durchgeführt. Bei der Anordnung zweier Sensoren im Abgastrakt, wie in Figur 1 dargestellt, besteht die Möglichkeit in kritischen Bereichen die Abgaszusammensetzung vor und nach Katalysator auszuwerten und anhand eines Plausibiltätsvergleich die Ergebnisse der Verfahren überprüfen zu können. Damit kann überprüft werden, ob der Motor sein Emissionsverhalten verändert hat. Im Falle einer Änderung kann die Diagnose angepaßt werden.

**Patentansprüche**

1. Verfahren zur Überprüfung der Funktion des Katalysators in Brennkraftmaschinen mit einem im Abgastrakt nach dem Katalysator angeordneten Sensor zur Erfassung der Abgaswerte, **dadurch gekennzeichnet, daß** anhand erfaßter Betriebsparameter (n ,L ,T, v) gleichartige Betriebszustände (BZ) der Brennkraftmaschine bestimmt werden, daß aus einer definierten Anzahl von Abgaswerten während eines gleichartigen Betriebzustandes (BZ) ein statistisch abgesicherter Gesamtabgasmittelwert ($x_k$) gebildet wird und mit einem aus einer Speichereinrichtung für diesen Betriebszustand entnommenen, maximal zulässigen Abgaswert ($AGW_{SP}$) verglichen wird, daß ein defekter Katalysator erkannt wird, wenn der aktuell ermittelte Gesamtabgasmittelwert den zulässigen Abgaswert ($x_k > AGW_{SP}$) überschreitet und daß das Ergebnis des Vergleichs des aktuell ermittelten Gesamtabgasmittelwertes mit dem dem Speicher entnommenen zulässigen Abgaswert ($AGW_{akt} > AGW_{SP}$) mittels eines zweiten im Abgas vor dem Katalysator befindlichen Sensors und der Auswertung der Umsetzungsrate auf Plausibilität überprüft wird.

2. Verfahren nach Anspruch 1, **dadurch gekennzeichnet, daß** für den ausgewählten auszuwertenden Betriebszustand aus einer vorgebbaren Anzahl (g) gemessener Abgaswerte ($AGW_{1...f}$) eine Abgasmittelwert ($AGMW_i$) berechnet wird.

3. Verfahren nach Anspruch 2, **dadurch gekenn-**

zeichnet, daß der Gesamtabgasmittelwert ($x_k$) aus aus einer vorgebbaren Anzahl (n) von während eines Betriebzustandes berechneten Abgasmittelwerten (AGMW$_{i...n}$) bestimmt wird.

4. Verfahren nach Anspruch 3, **dadurch gekennzeichnet, daß** der ermittelte Gesamtabgasmittelwert ($x_k$) mit einem betriebspunktabhängigem durch statistische Verfahren ermittelten Offset ($x_V$) beaufschlagt wird.

5. Verfahren nach einem der vorherigen Ansprüche, **dadurch gekennzeichnet, daß** das die Überprüfung der Katalysatorfunktion nur in Betriebszuständen, die einen erhöhten Stickoxidanteil, CO-Anteil und/oder HC-Anteil im Abgas aufweisen, durchgeführt wird.

6. Verfahren nach einem der vorherigen Ansprüche, **dadurch gekennzeichnet, daß** der gemessene Abgaswert (AGW) wahlweise mit einer Motorzustandsgröße, insbesondere einem Wert für den Luftmassenstrom und/oder für den Kraftstoffmassenstrom mathematisch verknüpft wird.

7. Verfahren nach einem der vorherigen Ansprüchen, **dadurch gekennzeichnet, daß** die Überprüfung der Katalysatorfunktion in transienten Betriebszuständen bei betriebswarmem Motor und betriebswarmer Katalysatoranlage durchgeführt wird.

**Claims**

1. A method of monitoring the function of the catalyst in internal-combustion engines, with a sensor arranged downstream of the catalyst in the exhaust system for detecting the exhaust-emission figures, **characterized in that** similar operational states (**BZ**) of the internal-combustion engine are determined with reference to detected operating parameters (**n, L, T, v**), a statistically safe overall average exhaust-emission figure ($x_k$) is formed from a defined number of exhaust-emission figures during a similar operational state (**BZ**) and is compared with a maximum permissible exhaust-emission figure (**AGW$_{SP}$**) taken from a memory device for this operational state, a defective catalyst is recognized when the currently detected overall average exhaust-emission figure exceeds the permissible exhaust-emission figure ($x_k$ > **AGW$_{SP}$**), and the result of the comparison of the currently detected overall average exhaust-emission figure with the permissible exhaust-emission figure (**AGW$_{akt}$** > **AGW$_{SP}$**) taken from the memory is monitored for plausibility by means of a second sensor present in the exhaust gas upstream of the catalyst and the evaluation of the reaction rate.

2. A method according to Claim 1, **characterized in that** an average exhaust-emission figure (**AGMW$_i$**) is calculated from a pre-determinable number (**g**) of measured exhaust-emission figures (**AGMW$_{1 ... f}$**) for the selected operational state to be evaluated.

3. A method according to Claim 2, **characterized in that** the overall average exhaust-emission figure ($x_k$) is determined from average exhaust-emission figures (**AGMW$_{i ... n}$**) calculated from a pre-determinable number (**n**) of ... during an operational state.

4. A method according to Claim 3, **characterized in that** the overall average exhaust-emission figure ($x_k$) determined is subjected to an offset ($x_v$) dependent upon the operating point and determined by statistical methods.

5. A method according to one of the preceding Claims, **characterized in that** the monitoring of the catalyst function is carried out only in operational states which have an increased nitrogen oxide proportion, CO proportion and/or HC proportion in the exhaust gas.

6. A method according to one of the preceding Claims, **characterized in that** the measured exhaust-emission figure (**AGW**) is optionally linked mathematically to an engine-state variable, in particular a value for the air-mass flow and/or for the fuel-mass flow.

7. A method according to one of the preceding Claims, **characterized in that** the monitoring of the catalyst function is carried out in transient operational states with the engine at operating heat and the catalyst unit at operating heat.

**Revendications**

1. Procédé de vérification du fonctionnement du catalyseur dans des moteurs à combustion interne avec un capteur installé dans la voie des gaz d'échappement après le catalyseur pour la détection des valeurs des gaz d'échappement, **caractérisé en ce que**, à l'aide des paramètres de fonctionnement détectés (n, L, T, v) des états de fonctionnement similaires (BZ) du moteur à combustion interne sont déterminés, **en ce que** à partir d'un nombre défini de valeurs des gaz d'échappement pendant un état de fonctionnement similaire (BZ), une valeur moyenne totale des gaz d'échappement ($x_k$) garantie statistiquement est établie et comparée à une valeur maximale admissible des gaz d'échappement (AGW$_{SP}$) extraite d'un dispositif de mémorisation pour cet état de fonctionnement, **en ce qu'**un catalyseur défectueux est identifié lorsque la valeur moyenne totale actuelle déterminée des gaz d'échappement dépasse la valeur des gaz d'échappement admissible ($x_k$ > AGW$_{SP}$) et **en ce que** l'on vérifie la plausibilité du résultat de la comparaison entre la valeur moyenne totale actuelle déterminée des gaz d'échappement et la valeur des gaz d'échappement admissible extraite de la mémoire (AGW$_{akt}$ > AGW$_{SP}$) à l'aide d'un second capteur installé dans les gaz d'échappement avant le catalyseur et de l'évaluation du taux de conversion.

2. Procédé selon la revendication 1, **caractérisé en ce que**, pour l'état de fonctionnement choisi à évaluer, une valeur moyenne des gaz d'échappement (AGMWj) est calculée à partir d'un nombre prédéterminable (g) de valeurs des gaz d'échappement mesurées (AGW$_{1...f}$).

3. Procédé selon la revendication 2, **caractérisé en ce que** la valeur moyenne totale des gaz d'échappement (xk) est déterminée à partir d'un nombre prédéterminable (n) de valeurs moyennes des gaz d'échappement calculées (AGMW$_{i...n}$) pendant un état de fonctionnement.

4. Procédé selon la revendication 3, **caractérisé en ce qu'**un décalage (xV) dépendant du point de fonctionnement, déterminé par des procédés statistiques, est affecté à la valeur moyenne totale des gaz d'échappement (xk) détectée.

5. Procédé selon l'une des revendications précédentes, **caractérisé en ce que** la vérification du fonctionnement du catalyseur n'est effectuée que pendant les états de fonctionnement qui présentent une portion plus élevée d'oxyde d'azote, de CO et/ou de HC dans les gaz d'échappement.

6. Procédé selon l'une des revendications précédentes, **caractérisé en ce qu'**une connexion mathématique est établie entre la valeur des gaz d'échappement mesurée (AGW) et, au choix, une valeur d'état du moteur, en particulier une valeur de débit massique d'air et/ou de débit massique de carburant.

7. Procédé selon l'une des revendications précédentes, **caractérisé en ce que** la vérification du fonctionnement du catalyseur est effectuée pendant les états de fonctionnement transitoires avec un moteur chaud en fonctionnement et une installation de catalyseur chaude en fonctionnement.

SG — 11

p,n
T, L

13

12

Motor

16

KAT

14 15

AGW$_{akt}$

17

10

**Fig.1**

n, p, T, L, v.... — 20

BZ — 21

AGW$_{gem}$ — 22

AGW$_{SP}$ — 23

AGW$_{gem}$ > AGW$_{SP}$ — 24

ja

n

Fehler — 25

OK — 26

**Fig.2**

Fig.3